# EUROPÄISCHE PATENTSCHRIFT

(11) **EP 0 655 292 B1**
(45) Veröffentlichungstag und Bekanntmachung des Hinweises auf die Patenterteilung: **05.03.1997**
(21) Anmeldenummer: 94113758.0
(22) Anmeldetag: 02.09.1994
(51) Int. Cl.: B23K 11/25, B23K 11/11

(54) **Verfahren zur Durchführung von Vielpunktschweissungen**
Multi-spot welding method
Méthode de soudage multipoints

(30) Priorität: 25.11.1993 CH 3526/93
(43) Veröffentlichungstag der Anmeldung: 31.05.1995
(73) Patentinhaber: H.A. SCHLATTER AG, CH-8952 Schlieren Zürich (CH)
(72) Erfinder: Rudin, Paul, CH-8116 Würenlos (CH); Widmer, Robert, CH-5212 Hausen (CH)
(74) Vertreter: Roshardt, Werner Alfred, Dipl.-Phys.

(56) Entgegenhaltungen:
- WO-A-89/11933
- WO-A-91/15317
- US-A- 4 985 612
- US-A- 5 072 090

## Beschreibung

Die Erfindung betrifft ein Verfahren zur Durchführung von Vielpunktschweissungen, insbesondere zum Betreiben einer Gitterschweissmaschine, wobei mit mehreren, getrennt geregelten Schweissströmen verschiedene Punkte in zeitlich gestaffelten Schweissintervallen geschweisst werden. Ferner betrifft die Erfindung eine Gitterschweissmaschine zur Durchführung des Verfahrens mit fixierten unteren Elektroden und gegenüberliegend beweglich gelagerten Brückenelektroden.

Verfahren der eingangs genannten Art und Anlagen zur Durchführung dieser Verfahren sind z. B. aus der US-5,072,090 oder der GB-A-2 249 747 bekannt. Bei den Anlagen handelt es sich um Gleichstromwiderstandsschweissmaschinen mit einer Mehrzahl von Punktschweisszangen, welche strommässig individuell steuerbar sind. Damit die Leistungsaufnahme der Gesamtanlage während des Schweissens möglichst frei von Spitzen ist, werden die Punkte nacheinander geschweisst.

Die aus dem oben genannten Stand der Technik bekannten Anlagen werden zur automatischen Fertigung von Gebrauchsgütern wie z. B. Fahrzeugchassis u. dgl. eingesetzt. Mit den Schweisszangen werden die entsprechenden Teile verschweisst. Eine besondere Situation liegt dagegen bei sog. Gitterschweissmaschinen vor, bei welchen ein Querdraht mit mehreren Längsdrähten verschweisst werden muss. Ein im oben genannten Sinn kaskadiertes Schweissen wäre zwar erwünscht, um die Leistungsaufnahme möglichst gering zu halten, ist aber aus mechanischen bzw. schweisstechnischen Gründen insbesondere bei engmaschigen Gittern nicht gangbar. Wird nämlich von zwei benachbarten Gitterpunkten der eine geschweisst und der andere nicht, dann führt dies wegen der Einschweisstiefe zu einer Deformation des Querdrahts. Die für das Schweissen erforderliche, dosierte Presskraft würde stattdessen für die Deformation des Querdrahts aufgebraucht. Im Endeffekt würden schlechte Schweissstellen resultieren.

Eine Gitterschweissmaschine der eingangs genannten Art ist beispielsweise aus der WO-A-91/15317 bekannt.

Aufgabe der Erfindung ist es, ein Verfahren der eingangs genannten Art anzugeben, das sich durch eine reduzierte Leistungsaufnahme auszeichnet und zum Verschweissen von Gittern und anderen Werkstücken mit geringem Schweisspunktabstand eignet.

Gemäss der Erfindung besteht die Lösung darin, dass die Staffelung so gewählt ist, dass zeitlich aufeinanderfolgende Schweissintervalle in jedem Fall teilweise, d. h. zu mehr als 0% und zu weniger als 100% überlappen zwecks Minimierung mechanischer Deformation des Werkstücks.

Erfindungsgemäss sind somit die Schweissintervalle nicht mehr zeitlich streng getrennt oder zusammenfallend, sondern teilweise überlappend. Die Leistungsaufnahme ist natürlich etwas grösser als bei völliger zeitlicher Separation der Schweissströme. Andererseits können nun Objekte geschweisst werden, bei denen früher nur ein Blockschweissen möglich war. Mit der Erfindung wird somit ein gleichsam rollendes Schweissen verwirklicht.

Gemäss einer bevorzugten Ausführungsform werden die Schweissintervalle so gestaffelt, dass sie zu mindestens 50% überlappen. D. h. in mindestens zwei zeitlich aufeinanderfolgenden Schweisspunkten fliesst ein Strom. Selbstverständlich können bei einer Schweissung mit sehr vielen Schweisspunkten mehrere erfindungsgemässe Kaskaden parallel ablaufen.

Das erfindungsgemässe Verfahren ist insbesondere zum Verschweissen eines Querdrahts mit mehreren Längsdrähten geeignet, wobei örtlich benachbarte Gitterpunkte auch in zeitlich aufeinanderfolgenden Schweissintervallen geschweisst werden. Der Ueberlappungsgrad der Schweissintervalle wird in Abhängigkeit von der Maschenweite des Gitters, der Dicke der Drähte, der maximal tolerierbaren Leistungsaufnahme und/oder der gewünschten Arbeitsgeschwindigkeit eingestellt.

Gemäss einer besonders bevorzugten Ausführungsform verläuft die Staffelung von einem Ende des Querdrahts zum anderen. Die beim Schweissen auftretende Ausdehnung des Querdrahts kann dann nicht zu unerwünschten Deformationen des Gitters führen. Aehnliches gilt für ein Schweissen von der Mitte gegen beide Enden hin. Die Schweisszeit ist dann insgesamt kürzer, da zwei Kaskaden parallel ablaufen.

Voll zum Tragen kommen die Vorteile des Verfahrens wenn Gitter mit grossen Drahtstärken und engen Maschenweiten hergestellt werden, wie z. B. Baustahlmatten mit einer Maschenweite von weniger als 100 mm und Drahtstärken von 8 mm und mehr.

Eine zur Durchführung des Verfahrens geeignete Gitterschweissmaschine weist fixierte erste Elektroden und beweglich gelagerte, gegenüberliegende Brückenelektroden auf. Mit einer Steuerschaltung, die so ausgebildet ist, dass Schweissintervalle zeitlich hintereinanderfolgender Schweissstromkreise teilweise (d. h. zu mehr als 0% und zu weniger als 100%) überlappen. Vielpunktschweissanlagen mit zeitlich individuell steuerbaren Stromkreisen sind bekannt. Zur Realisierung der Erfindung genügt es im Prinzip also, die zeitliche Ansteuerung neu zu programmieren.

Vorzugsweise ist die Steuerschaltung so ausgestaltet resp. programmiert, dass zeitlich aufeinanderfolgende Schweissintervalle zu zwei Dritteln oder mehr überlappen. Es hat sich in der Praxis gezeigt, dass damit ein guter Ausgleich zwischen Leistungsaufnahme, und Schweissgeschwindigkeit erzielt werden kann.

Es kann vorteilhaft sein, die Steuerschaltung auf Blockschweissen umprogrammierbar zu gestalten. Vorzugsweise wird mit Wechselstrom geschweisst. Im Prinzip ist die Erfindung aber auch auf Gleichstromschweissen anwendbar.

Aus der Gesamtheit der Patentansprüche und der nachfolgenden Detailbeschreibung ergeben sich weitere vorteilhafte Merkmalskombinationen und Ausführungsformen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine schematische Darstellung einer zur Durchführung der Erfindung geeigneten Gitterschweissmaschine;
- Fig. 2: eine schematische Darstellung einer ersten erfindungsgemässen Schweissintervallkaskade;
- Fig. 3: eine schematische Darstellung einer vom Zentrum ausgehenden Kaskade der Schweissintervalle.

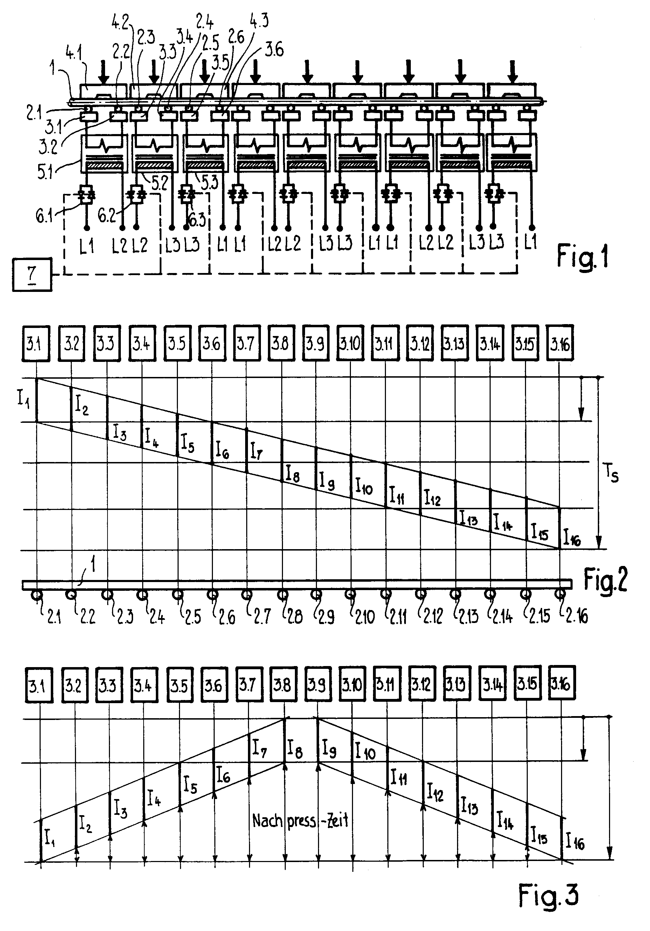

In Fig. 1 ist schematisch eine Wechselstromgitterschweissmaschine gezeigt. Ein Querdraht 1 wird mit Längsdrähten 2.1, 2.2, ... verschweisst. Die Längsdrähte 2.1, 2.2, ... sind auf starren unteren Elektroden 3.1, 3.2, ... gelagert. Der Querdraht 1 wird in den Gitterpunkten durch Elektrodenbrücken 4.1, 4.2, ... auf die Längsdrähte 2.1, 2.2, 2.3, 2.4, ... gepresst.

Der Schweissstrom wird durch Transformatoren 5.1, 5.2, ... erzeugt. Primärseitig sind die Transformatoren 5.1, 5.2, ... mit Tyristorschaltungen 6.1, 6.2, ... beschaltet. Ferner sind die Transformatoren 5.1, 5.2, ... zyklisch vertauscht an die drei Phasen (L1, L2, L3) eines Drehstromnetzes angeschlossen.

Die durch Kupferblöcke gebildeten Elektrodenbrücken 4.1, 4.2, ... sind beweglich gelagert und können sich deshalb an den Verlauf des Querdrahts 1 anpassen. Sie werden mit der für das Schweissen erforderlichen Presskraft (dargestellt durch einen fetten Pfeil) beaufschlagt.

Die Tyristorschaltungen 6.1, 6.2, ... werden von einer Steuerschaltung 7 kontrolliert, welche die erfindungsgemässe Kaskadensteuerung der Schweissströme beinhaltet.

Es ist zu beachten, dass - abgesehen von der Steuerschaltung - die Schweissmaschine konventioneller Bauart sein kann. Wichtig ist, dass zumindest eine der an den Schweisspunkten anliegenden Elektroden beweglich gelagert ist, da der Querdraht 1 bei der Erfindung sukzessive von einem Ende zum anderen deformiert wird.

Bei der in Fig. 1 gezeigten Vorrichtung können alle elektrischen Installationen unterhalb der Arbeitsebene angeordnet werden, was den Vorteil einer freien Schweissebene hat und entsprechend das gleichzeitige Schweissen mehrerer Drähte zulässt.

Fig. 2 zeigt nun eine erste Ausführungsform des erfindungsgemässen Verfahrens. Mit I₁, ..., I₁₆ sind die Schweissintervalle der verschiedenen Transformatoren 3.1, ..., 3.16 bezeichnet. Sie sind alle gleich lang. Benachbarte Schweissintervalle I₁ und I₂ resp. I2 und I3 resp. ... überlappen zeitlich zu 80%. D. h. es sind jeweils höchstens fünf Transformatoren gleichzeitig eingeschaltet (z. B. 3.1 bis 3.5 oder 3.2 bis 3.6 etc.). Zu Beginn und gegen Ende der Schweisszeit Tₛ steigt die von der Schweissmaschine insgesamt verbrauchte Leistung sukzessive an resp. fällt sukzessive ab. Dazwischen ist die verbrauchte Leistung mehr oder weniger konstant.

In Fig. 2 sind im untersten Teil ein Querdraht 1 und Längsdrähte 2.1 bis 2.16 dargestellt. Es ist zu erkennen, dass zu einem bestimmten Zeitpunkt die Eindringtiefe von links (Querdraht 2.1) bis rechts (Querdraht 2.16) abnimmt. Dies deshalb, weil die einzelnen Schweissvorgänge zeitlich gegeneinander verschoben sind und daher in je unterschiedlichen Stadien des Verschweissungsprozesses sind. Es versteht sich, dass der Querdraht 1 sukzessive leicht gebogen wird. Allerdings kann sich die Biegung über mehrere Gitterpunkte hinweg erstrecken, so dass er nur einer verhältnismässig geringen Deformation unterzogen wird.

Fig. 3 zeigt eine weitere bevorzugte Ausführungsform der Schweissintervallkaskade. Bei diesem Beispiel wird mit dem Schweissen in der Mitte mit den Transformatoren 3.8 und 3.9 begonnen und dann nach beiden Seiten hin fortgesetzt (bis Transformator 3.1 resp. 3.16). Es ist zu beachten, dass die Schweissintervalle I₈ und I₉ gleichzeitig sind. Dies hat den Vorteil, dass zu Beginn die Deformation nicht allzu punktuell erfolgen muss.

Im vorliegenden Beispiel überlappen die benachbarten Schweissintervalle I₉ und I₁₀ resp. I₈ und I₇ etc. zu zwei Dritteln. Innerhalb einer der beiden Kaskaden sind somit höchstens drei Transformatoren (z. B. 3.9, 3.10, 3.11 oder 3.10, 3.11, 3.12 resp. 3.8, 3.7, 3.6 oder 3.7, 3.6., 3.5 etc.) gleichzeitig stromführend. Da aber im Prinzip zwei Kaskaden parallel ablaufen, ziehen zu einem bestimmten Zeitpunkt maximal sechs Transformatoren gleichzeitig Strom aus dem Netz.

Beim Schweissen verlängert sich der Querdraht um ein gewisses Mass. Es ist deshalb wichtig, ein entsprechendes Aufweichen des Querdrahts zuzulassen. Dies ist in beiden gezeigten Ausführungsformen gewährleistet. (Ungünstig wäre demgegenüber ein Schweissen von beiden Enden gegen die Mitte.)

Die Schweisstiefe hängt von der Drahtdicke ab. Relativ betrachtet sind es etwa 6% der Summe der beiden Drahtdurchmesser.

Das erfindungsgemässe Verfahren eignet sich insbesondere für den Baustahlbereich (Lagermatten u. dgl.), wo grosse Stückzahlen bestimmter Maschenweite herzustellen sind. Besondere Vorteile hat die Erfindung insbesondere bei der Herstellung von engmaschigen Gittern mit grossen Drahtstärken. Im Baustahlbereich versteht man darunter Gitter mit Maschenweiten unter 100 mm und Drahtdurchmessern von z. B. mehr als 8-10 mm.

Bei Industriegittern, die auf geringeren Drahtstärken basieren, wird mit der Erfindung der Maschenweitenbereich von weniger als 50 mm angestrebt.

Eine erfindungsgemässe Schweissmaschine kann natürlich zusätzlich mit den an und für sich bekannten Blockschweisssteuerungen ausgestattet sein, bei welchen alle oder zumindest eine ganze Gruppe von Transformatoren gleichzeitig angesteuert werden (Umschaltmöglichkeit).

Die Erfindung beschränkt sich natürlich nicht auf Gitterschweissmaschinen. Auch bei anderen Vielpunktschweissanlagen kann es u. U. vorteilhaft sein, mit verschieden langen, aber sich trotzdem teilweise überlappenden Schweissintervallen zu arbeiten. Auch der Ueberlappungsbereich braucht nicht immer konstant zu sein. Schliesslich ist auch eine Kombination aus blockweisem und kaskadiertem Schweissen in dem Sinn möglich, dass gewisse Schweisszangen vollständig gleichgeschaltet sind und andere daneben zeitlich abgestuft. (Ansatzweise ist dies bereits in der Ausführungsform gemäss Fig. 3 gegeben, da die beiden Intervalle I₈ und I₉ zeitgleich sind.)

Zusammenfassend kann festgehalten werden, dass durch die Erfindung neue Wege beschritten werden, um Gittermatten - oder ganz allgemein mechanisch untereinander zusammenhängende Schweisspunkte - unter Vermeidung von Leistungsspitzen zu schweissen.

## Patentansprüche

1. Verfahren zur Durchführung von Vielpunktschweissungen, insbesondere zum Betreiben einer Gitterschweissmaschine, wobei mit mehreren getrennt geregelten Schweissströmen verschiedene Punkte in zeitlich gestaffelten Schweissintervallen (I₁, ..., I₁₆) geschweisst werden, dadurch gekennzeichnet, dass die Staffelung so gewählt ist, dass zeitlich aufeinanderfolgende Schweissintervalle in jedem Fall teilweise, d. h. zu mehr als 0% und zu weniger als 100% überlappen zwecks Minimierung mechanischer Deformation des Werkstücks.

2. Verfahren nach Anspruch 1, dadurch gekennzeichnet, dass die Schweissintervalle so gestaffelt werden, dass sie zu mindestens 50% überlappen.

3. Anwendung des Verfahrens nach Anspruch 1 oder 2 zum Verschweissen eines Querdrahts (1) mit Längsdrähten (2.1, 2.2, ...), wobei örtlich benachbarte Punkte auch in zeitlich aufeinanderfolgenden Schweissintervallen (I₁, I₂, ...) geschweisst werden.

4. Anwendung nach Anspruch 3, dadurch gekennzeichnet, dass die Staffelung von einem Ende des Querdrahts (1) zum anderen verläuft oder von der Mitte gegen die beiden Enden.

5. Anwendung nach Anspruch 3 oder 4 zum Schweissen von Baustahlmatten einer Maschenweite von 100 mm oder weniger.

6. Gitterschweissmaschine zur Durchführung des Verfahrens nach Anspruch 1 bis 5 mit fixierten ersten Elektroden (3.1, 3.2, ...) und beweglich gelagerten gegenüberliegenden Brückenelektroden (4.1, 4.2, ...), gekennzeichnet durch eine Steuerschaltung (7), die so ausgebildet ist, dass Schweissintervalle zeitlich hintereinander gestaffelter Schweissstromkreise teilweise, d. h. zu mehr als 0% und zu weniger als 100% zeitlich überlappen.

7. Gitterschweissmaschine nach Anspruch 6, dadurch gekennzeichnet, dass zeitlich aufeinanderfolgende Schweissintervalle zu mindestens zwei Dritteln überlappen.

8. Gitterschweissmaschine nach Anspruch 6 oder 7, dadurch gekennzeichnet, dass die Steuerschaltung (7) auf Blockschweissen umschaltbar ist.

9. Gitterschweissmaschine nach einem der Ansprüche 6 bis 8, dadurch gekennzeichnet, dass die Steuerschaltung (7) so ausgebildet ist, dass die Schweissstromkreise von der Mitte des Querdrahts (1) zu den beiden Enden oder von einem Ende zum anderen kaskadiert sind.

10. Gitterschweissmaschine nach einem der Ansprüche 6 bis 9, dadurch gekennzeichnet, dass die Schweissstromkreise als Wechselstromkreise ausgebildet sind.

## Claims

1. Process for performing multi-spot welding, in particular for operating a grid welding machine, wherein various points are welded at welding intervals (I₁, ..., I₁₆) which are staggered as regards time by means of a plurality of welding currents which are controlled separately, characterised in that the staggering is selected such that welding intervals which follow one another in time overlap partly, ie. by more than 0% and less than 100%, in each case, for the purpose of minimising the mechanical deformation of the workpiece.

2. Process according to Claim 1, characterised in that the welding intervals are staggered in such a manner that they overlap by at least 50%.

3. Application of the process according to Claim 1 or 2 for welding a transverse wire (1) to longitudinal wires (2.1, 2.2, ...), wherein points which are adjacent as regards location are also welded at welding intervals (I₁, I₂, ...) which follow one another in time.

4. Application according to Claim 3, characterised in that the staggering runs from one end of the transverse wire (1) to the other or from the middle to both ends.

5. Application according to Claim 3 or 4 for welding structural steel mats of a mesh size of 100 mm or less.

6. Grid welding machine for performing the process according to Claims 1 to 5, having fixed first electrodes (3.1, 3.2, ...) and movably mounted opposite bridge electrodes (4.1, 4.2, ...) characterised by a control device (7) which is formed such that welding intervals of welding current circuits which are staggered behind one another overlap partially, ie. by more than 0% and less than 100%, as regards time.

7. Grid welding machine according to Claim 6, characterised in that welding intervals which follow one another as regards time overlap by at least two thirds.

8. Grid welding machine according to Claim 6 or 7, characterised in that the control circuit (7) can be switched over to block welding.

9. Grid welding machine according to one of Claims 6 to 8, characterised in that the control circuit (7) is formed such that the welding current circuits are cascaded from the middle of the transverse wire (1) to the two ends or from one end to the other.

10. Grid welding machine according to one of Claims 6 to 9, characterised in that the welding current circuits are formed as alternating current circuits.

## Revendications

1. Procédé pour l'exécution de soudages multi-points, notamment pour faire fonctionner une machine de soudage de grilles, différents points étant soudés avec plusieurs courants de soudage réglés séparément, pendant des intervalles de soudage (I₁,...,I₁₆) échelonnés dans le temps, caractérisé en ce que l'échelonnement est choisi de telle sorte que des intervalles de soudage, qui se succèdent dans le temps, se chevauchent partiellement dans chaque cas, c'est-à-dire à plus de 0% et à moins de 100%, de manière à réduire la déformation mécanique de la pièce à traiter.

2. Procédé selon la revendication 1, caractérisé en ce que les intervalles de soudage sont échelonnés de telle sorte qu'ils se chevauchent d'au moins 50 %.

3. Application du procédé selon la revendication 1 ou 2, pour le soudage d'un fil transversal (1) à des fils longitudinaux (2.1, 2.2, ...), des points voisins localement étant également soudés pendant des intervalles de soudage (I₁, I₂, ...) qui se succèdent dans le temps.

4. Application selon la revendication 3, caractérisée en ce que l'échelonnement s'étend depuis une extrémité du fil transversal (1) jusqu'à son autre extrémité ou bien à partir du centre en direction des deux extrémités.

5. Application selon la revendication 3 ou 4 pour le soudage de treillis en acier de construction ayant une largeur de mailles de 100 mm ou moins.

6. Machine pour le soudage de grilles pour la mise en oeuvre du procédé selon les revendications 1 à 5 comportant des premières électrodes fixes (3.1, 3.2,...) et des électrodes opposées en forme d'étriers (4.1, 4.2, ...), montées de manière à être déplaçables, caractérisée par un circuit de commande (7), qui est agencé de telle sorte que des intervalles de soudage de circuits de soudage échelonnés à la suite les uns des autres dans le temps se chevauchent dans le temps d'une manière partielle, c'est-à-dire à plus de 0 % et à moins de 100 %.

7. Machine de soudage de grilles selon la revendication 6, caractérisée en ce que les intervalles de soudage, qui se succèdent dans le temps, se chevauchent au moins aux deux tiers.

8. Machine de soudage de grilles selon la revendication 6 ou 7, caractérisée en ce que le circuit de commande (7) peut être commuté sur un soudage de blocs.

9. Machine de soudage de grilles selon l'une des revendications 6 à 8, caractérisée en ce que le circuit de commande (7) est agencé de telle sorte que les circuits de soudage sont branchés en cascade depuis le milieu du fil transversal (1) en direction des deux extrémités ou depuis une extrémité à l'autre.

10. Machine de soudage de grilles selon l'une des revendications 6 à 9, caractérisée en ce que les circuits de soudage sont agencés sous la forme de circuits à courant alternatif.
